# EUROPÄISCHE PATENTSCHRIFT

(11) **EP 1 016 108 B1**
(45) Veröffentlichungstag und Bekanntmachung des Hinweises auf die Patenterteilung: **10.04.2002**
(21) Anmeldenummer: 98949887.8
(22) Anmeldetag: 13.08.1998
(51) Int. Cl.: H01G 9/10, H01G 9/06, H01G 2/02

(54) **ELEKTRISCHER KONDENSATOR**
ELECTRICAL CAPACITOR
CONDENSATEUR ELECTRIQUE

(30) Priorität: 18.09.1997 DE 19741146
(43) Veröffentlichungstag der Anmeldung: 05.07.2000
(73) Patentinhaber: EPCOS AG, 81541 München (DE)
(72) Erfinder: GOESMANN, Hubertus, D-89564 Auernheim (DE)
(74) Vertreter: Epping, Wilhelm, Dipl.-Ing.
(86) Internationale Anmeldenummer: DE9802351
(87) Internationale Veröffentlichungsnummer: WO9914774

(56) Entgegenhaltungen:
- DE-A- 4 401 035
- PATENT ABSTRACTS OF JAPAN vol. 096, no. 010, 31. Oktober 1996 & JP 08 162376 A (MARCON ELECTRON CO LTD), 21. Juni 1996
- PATENT ABSTRACTS OF JAPAN vol. 014, no. 507 (E-0998), 6. November 1990 & JP 02 209716 A (HITACHI CONDENSER CO LTD), 21. August 1990

## Beschreibung

Die Erfindung betrifft einen elektrischen Kondensator nach dem Oberbegriff des Patentanspruchs 1.

Ein derartiger Kondensator ist aus PATENT ABSTRACTS OF JAPAN vol. 096, no. 010, 31. Oktober 1996 & JP 08 162 376 A bekannt. Bei diesem Kondensator ist die, nicht lösbare, Schraubverbindung durch ein Kunstharz fixiert.

Weiterhin ist es üblich, in Deckeln für Kondensatorgehäuse Anschlüsse anzuordnen, die mit den zusätzlichen Isolierteilen (z. B. aus Keramik) in den Deckel, z. B. aus Messing, eingelötet werden. Es ist auch üblich, Kunststoffspritzteile mit Aluminiumdeckeln zu vernieten bzw. Anschlüsse mit metallisierten Leiterplatten zu verlöten. Die derart mit Anschlüssen versehenen Deckel wurden mit den Gehäusen dicht verbördelt, vergossen oder verschweißt.

Wenn an einem derartig fertiggestellten Kondensator Fehler auftreten, ist es äußerst schwierig, den Deckel ohne Beschädigung des Gehäuses zu demontieren, um gegebenenfalls den Fehler beheben zu können. Dies ist insbesondere bei Großkondensatoren für Leistungsanwendungen mit erheblichen zusätzlichen Kosten verbunden, da derartige Kondensatoren mit hohem Materialaufwand gefertigt werden.

Aufgabe der Erfindung ist es, einen in ein Gehäuse eingebauten Kondensator anzugeben, der bei fehlerhaft montierten Teilen bzw. sonstigen Fehlern einfach zu demontieren ist.

Diese Aufgabe wird erfindungsgemäß durch einen Kondensator gelöst, welcher die im Patentanspruch 1 genannten Merkmale besitzt.

Vorteilhafte Ausgestaltungen sind in den Unteransprüchen angeführt.

Die Erfindung wird im folgenden anhand eines Ausführungsbeispieles näher erläutert.

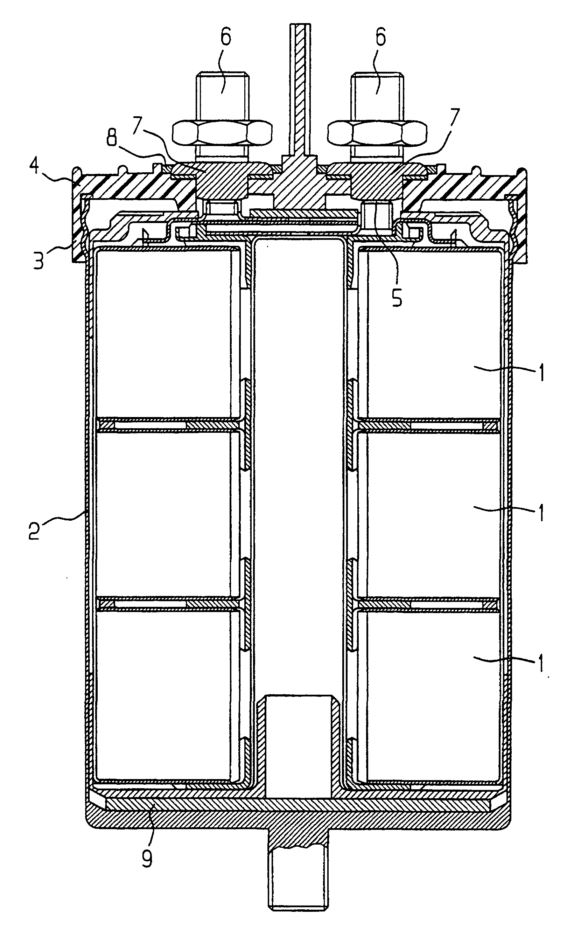

In der dazugehörenden Zeichnung mit einer einzigen Figur ist ein Kondensator dargestellt, der aus drei miteinander verschalteten Kondensatorwickeln 1 aufgebaut ist, die in ein Metallgehäuse 2 eingebaut sind.

Am oberen, offenen Ende des Gehäuses 2 ist ein Schraubgewinde 3 angebracht, so daß der zum Verschließen des Gehäuses 2 erforderliche Deckel 4 durch eine Schraubverbindung mit dem Gehäuse 2 verbunden werden kann. Der Deckel 4 besteht dabei vorzugsweise aus einem Kunststoff.

Im Deckel 4 sind Durchführungsöffnungen 5 zum Anbringen von Anschlußbolzen 6 angeordnet.

Beim Aufschrauben des Deckels 4 zum Verschließen des Gehäuses 2 erfolgt die Verschraubung derart, daß Einbauverschraubungen 7 über den Durchführungsöffnungen 5 liegen. Anschließend werden die Anschlußbolzen 6 mit dem Einbau verschraubt und vorzugsweise mit einem Verguß 8 zur Verdrehsicherung versehen.

Das Lösen des Schraubdeckels 4 wird somit zwangsläufig durch das Verschrauben der Anschlußbolzen 6 formschlüssig verhindert.

Am Boden des Gehäuses 2 ist eine Gummiaufnahme 9 angeordnet, die einerseits als Verdrehsicherung wirkt und andererseits zum Längenausgleich bei unterschiedlichen Toleranzen der Wickelabmessungen dient.

## Patentansprüche

1. Elektrischer Kondensator, der in ein durch einen Deckel verschlossenes Gehäuse eingebaut ist, bei dem der Deckel (4) mittels einer fixierten Schraubverbindung mit dem Gehäuse (2) verbunden ist, und bei dem im Deckel (4) Anschlußbolzen (6) angeordnet sind,
**dadurch gekennzeichnet,**
**daß** im Deckel (4) Durchführungsöffnungen (5) zum Anbringen der Anschlußbolzen (6) angeordnet, daß Einbauverschraubungen (7) über den Durchführungsöffnungen (5) liegen, und daß die Anschlußbolzen (6) mit den Einbauverschraubungen (7) verschraubt sind.

2. Elektrischer Kondensator nach Anspruch 1,
**dadurch gekennzeichnet,**
**daß** die Anschlußbolzen (6) durch einen Verguß (8) fixiert sind.

3. Elektrischer Kondensator nach Anspruch 1 oder 2,
**dadurch gekennzeichnet,**
**daß** am Boden des Gehäuses (2) eine Gummiaufnahme (9) angeordnet ist.

## Claims

1. Electrical capacitor, which is fitted in a housing that is closed by a cover, in which the cover (4) is connected by means of a fixed screw connection to the housing (2), and in which connecting bolts (6) are arranged in the cover (4), **characterized in that** aperture openings (5) are arranged in the cover (4) for the fitting of the connecting bolts (6), **in that** built-in screw attachments (7) are located above the aperture openings (5), and **in that** the connecting bolts (6) are screwed to the built-in screw attachments (7).

2. Electrical capacitor according to Claim 1, **characterized in that** the connecting bolts (6), are fixed by means of encapsulation (8).

3. Electrical capacitor according to Claim 1 or 2, **characterized in that** a rubber holder (9) is arranged on the bottom of the housing (2).

## Revendications

1. Condensateur électrique, qui est monté dans un godet fermé par un couvercle, dans lequel le couvercle (4) est assemblé au godet (2) au moyen d'un joint vissé immobilisé et dans lequel il est monté des boulons (6) d'assemblage dans le couvercle (4),
**caractérisé**
**en ce qu'**il est prévu dans le couvercle (4) des ouvertures (5) de traversée pour amener les boulons (6) d'assemblage, en ce que des pièces (7) taraudées de montage se trouvent au-dessus des ouvertures (5) de traversée et en ce que les boulons (6) d'assemblage sont vissés avec les pièces (7) taraudées de montage.

2. Condensateur électrique suivant la revendication 1,
**caractérisé**
**en ce que** les boulons (6) d'assemblage sont immobilisés par un scellement (8).

3. Condensateur électrique suivant la revendication 1 ou 2,
**caractérisé**
**en ce qu'**il est monté une pièce (9) de réception en caoutchouc au fond du godet (2).
